# EUROPEAN PATENT APPLICATION

(11) **EP 4 617 154 A1**
(43) Date of publication of application: **17.09.2025**
(21) Application number: 22965041.1
(22) Date of filing: 07.11.2022
(51) Int. Cl.: B62D 25/20

(54) **FRAMEWORK MEMBER**

(71) Applicant: NIPPON STEEL CORPORATION, Chiyoda-ku Tokyo 100-8071 (JP)
(72) Inventor: MIKAZUKI, Yutaka, Tokyo 100-8071 (JP)
(74) Representative: Zimmermann & Partner Patentanwälte mbB
(86) International application number: PCT/JP2022/041371
(87) International publication number: WO 2024/100714

(57) **Abstract**

A frame member (100) includes a closed cross-section part (10) and a stress concentration part (20). The closed cross-section part (10) includes a flat part (41, 42, 311, 312) and a ridge part (313, 314, 32, 33, 43, 44, 45, 46). The flat part (41, 42, 31 1, 312) has a width (W1, W2, W3, W4) of 70.0 mm or less. The stress concentration part (20) is provided in at least one of the flat part (41, 42, 311, 312) and the ridge part (313, 314, 32, 33, 43, 44, 45, 46). The Vickers hardness of a central portion in a sheet thickness direction of the flat part (41, 42, 311, 312) is 350 Hv or more. The standard deviation ratio is more than 1.0, and the standard deviation ratio is obtained by dividing the standard deviation of the frequency distribution of the Vickers hardness of a near-surface portion of the flat part (41, 42, 311, 312) by the standard deviation of the frequency distribution of the Vickers hardness of the central portion in the sheet thickness direction of the flat part (41, 42, 311, 312).

## Description

### TECHNICAL FIELD

The present disclosure relates to a frame member. In particular, it relates to a frame member formed by a steel sheet.

### BACKGROUND ART

A frame member formed by a steel sheet is used for a body of an automobile, for example. Some frame members are deformed to absorb energy in a collision.

For example, Patent Literature I discloses a side frame for an automobile that is bent under an impact load to absorb the load. The side frame of Patent Literature 1 includes a plurality of ultra-high strength parts and a plurality of high strength parts. The ultra-high strength parts are disposed at intervals in the longitudinal direction of the side frame and each have a tensile strength of more than 1400 MPa. The high strength parts are disposed between the ultra-high strength parts to connect the ultra-high strength parts and each have a tensile strength of 500 MPa to 1000 MPa. Each high strength part is provided with a stress concentration part. The sheet thickness of each strength part is greater than the sheet thickness of each ultra-high strength part. According to Patent Literature 1, when an impact load is applied in the longitudinal direction (axial direction) of the side frame, the stress is concentrated at the stress concentration part, and the side frame is bent at the stress concentration part. In addition, according to Patent Literature 1, since a greater sheet thickness of the high strength part is ensured, an amount of elongation of the high strength part during bending can be ensured, and occurrence of a rupture in the high strength part can be reduced.

### CITATION LIST

### PATENT LITERATURE

Patent Literature 1:
Japanese Patent Application Publication No. 2017-001601

### SUMMARY OF INVENTION

### TECHNICAL PROBLEM

As described in Patent Literature 1, the frame member used for the body of an automobile or the like is required to be reduced in weight. To achieve weight reduction of the frame member, the frame member can be formed by a thin-wall steel sheet having a high strength. However, when a high strength steel sheet is used for the frame member, a rupture may occur in the frame member during deformation of the frame member under an applied load. In such a case, a desired deformation behavior of the frame member is not be achieved, and the energy absorption performance of the frame member decreases. Therefore, it is difficult to use a high strength steel sheet for the frame member, and it may be difficult to reduce the weight of the frame member by reducing the thickness of the steel sheet.

An objective of the present disclosure is to provide a lightweight frame member that can deliver excellent energy absorption performance.

### SOLUTION TO PROBLEM

A frame member according to the present disclosure is formed by using a steel sheet. The frame member includes a closed cross-section part and a stress concentration part. The closed cross-section part is a part of the frame member whose cross section perpendicular to an axial direction of the frame member is a closed cross section. The closed cross-section part includes a flat part and a ridge part. The flat part has a straight shape in the cross section perpendicular to the axial direction of the frame member and has a width of 70.0 mm or less. The ridge part is continuous to the flat part. The ridge part has a curved shape in the cross section perpendicular to the axial direction of the frame member. The stress concentration part is provided in at least one of the flat part and the ridge part. A Vickers hardness of a central portion in a sheet thickness direction of the flat part is 350 Hv or more. A standard deviation ratio is more than 1.0, and the standard deviation ratio is obtained by dividing a standard deviation of a frequency distribution of the Vickers hardness of a near-surface portion of the flat part by a standard deviation of a frequency distribution of the Vickers hardness of the central portion in the sheet thickness direction of the flat part.

### ADVANTAGEOUS EFFECTS OF INVENTION

The frame member according to the present disclosure can deliver excellent energy absorption performance. In addition, according to the present disclosure, the frame member can be reduced in weight.

### BRIEF DESCRIPTION OF DRAWINGS

[FIG. 1] FIG. 1 is a perspective view of a frame member according to a first embodiment.
[FIG. 2] FIG. 2 is a lateral cross-sectional view of the frame member shown in FIG. 1.
[FIG. 3] FIG. 3 is a perspective view of a frame member according to a second embodiment.
[FIG. 4] FIG. 4 is a lateral cross-sectional view of the frame member shown in FIG. 3.
[FIG. 5] FIG. 5 is a perspective view of a frame member according to a third embodiment.
[FIG. 6] FIG. 6 is a lateral cross-sectional view of the frame member shown in [FIG. 5.
[FIG. 7] FIG. 7 is a lateral cross-sectional view of a frame member according to a fourth embodiment.
[FIG. 8] FIG. 8 is a perspective view of the frame member shown in FIG. 7.
[FIG. 9] FIG. 9 is a graph showing a result of a VDA bending test of a cold rolled steel sheet having a tensile strength of 1180 MPa class.
[FIG. 10] FIG. 10 is a graph showing a result of a VDA bending test of a cold rolled steel sheet having a tensile strength of 1470 MPa class.
[FIG. 11] FIG. 11 is a schematic diagram showing a model used for a CAE analysis.
[FIG. 12] FIG. 12 is a graph showing a result of the CAE analysis.

### DESCRIPTION OF EMBODIMENTS

For example, some frame members used in automobiles or the like absorb energy by being bent and deformed when a compressive load in an axial direction is applied. In order to ensure the energy absorption performance of a frame member, the frame member needs to be bent and deformed at a desired position when a compressive load is applied. Furthermore, the energy absorption performance of the frame member can be improved by compactly folding the frame member to reduce the decrease in load (yield strength) after the bending and deformation.

On the other hand, to reduce the weight of the frame member, a high strength steel sheet can be used for forming the frame member to reduce the thickness of the frame member. However, when the frame member is compactly folded under a compressive load applied in the axial direction, the deformation is concentrated at the bent part of the frame member. Therefore, depending on the rupture resistance property of the high strength steel sheet, a rupture may occur in the frame member during deformation, and a desired deformation behavior of the frame member may not be achieved. Therefore, in some cases, a thin and high strength steel sheet cannot be used for the frame member, and it is difficult to reduce the weight of the frame member.

The inventor has earnestly investigated the shape and material properties of the frame member in order to reduce the weight of the frame member by using a high strength steel sheet and achieve a desired deformation behavior of the frame member. Then, the inventor has devised frame members according to embodiments.

A frame member according to an embodiment is formed by using a steel sheet. The frame member includes a closed cross-section part and a stress concentration part. The closed cross-section part is a part of the frame member whose cross section perpendicular to an axial direction of the frame member is a closed cross section. The closed cross-section part includes a flat part and a ridge part. The flat part has a straight shape in the cross section perpendicular to the axial direction of the frame member and has a width of 70.0 mm or less. The ridge part is continuous to the flat part. The ridge part has a curved shape in the cross section perpendicular to the axial direction of the frame member. The stress concentration part is provided in at least one of the flat part and the ridge part. A Vickers hardness of a central portion in a sheet thickness direction of the flat part is 350 Hv or more. A standard deviation ratio is more than 1.0, and the standard deviation ratio is obtained by dividing a standard deviation of a frequency distribution of the Vickers hardness of a near-surface portion of the flat part by a standard deviation of a frequency distribution of the Vickers hardness of the central portion in the sheet thickness direction of the flat part (a first configuration).

According to the result of the investigation by the inventor, it is advantageous to reduce the width of the flat part on the side of compression by bending in the closed cross-section part of the frame member, in order to bend and deform the frame member at a desired position and compactly fold the frame member. Therefore, with the frame member according to the first configuration, the width of the flat part provided in the closed cross-section part is 70.0 mm or less. As a result, when a compressive load is applied to the frame member in the axial direction, elastic buckling is less likely to occur in the flat part, and the load on (yield strength of) the flat part can be ensured even if the frame member is thin. Therefore, the frame member can be bent at the stress concentration part provided in at least one of the flat part and the ridge part continuous to the flat part. In addition, since the width of the flat part is 70.0 mm or less, the frame member can be compactly folded at the stress concentration part in the flat part and/or the ridge part. More specifically, when a compressive load is applied to the frame member in the axial direction, the frame member is bent at the stress concentration part with the flat part as the side of compression by bending, and the flat part is sharply folded. Therefore, adjacent regions of the folded flat part can be brought into contact with each other, thereby increasing the load after the bending and deformation. As a result, the frame member can deliver excellent energy absorption performance.

With the frame member according to the first configuration, the standard deviation ratio obtained by dividing the standard deviation of the frequency distribution of the Vickers hardness of the near-surface portion of the flat part by the standard deviation of the frequency distribution of the Vickers hardness of the central portion in the sheet thickness direction of the flat part is more than 1.0. That is, the metal micro-structure of the near-surface portion of the flat part is different from the metal micro-structure of the central portion of the flat part. In this way, the bending performance of the flat part can be improved. Therefore, when the frame member is bent and deformed with the flat part as the inner side of the bend, a rupture is less likely to occur in the flat part during deformation, and desired bending and deformation starting at the stress concentration part can be caused in the frame member. Therefore, the energy absorption performance of the frame member can be improved. In particular, when the width of the flat part is 70.0 mm or less, the energy absorption efficiency can be improved. In addition, since the flat part is formed by a high strength material having a Vickers hardness of 350 Hv or more at the central portion thereof, at least the flat part can be reduced in thickness. Therefore, a lightweight frame member can be provided.

The stress concentration part may be a recessed portion or a projecting portion formed on at least one of the flat part and the ridge part (a second configuration).

The flat part may include a bent portion that is bent when viewed from a side of the ridge part or viewed in the sheet thickness direction. In this case, the stress concentration part is the bent portion (a third configuration).

At least one of the flat part and the ridge part may include a plurality of high strength parts and a low strength part. The plurality of high strength parts is disposed at intervals in the axial direction of the frame member. The low strength part is disposed between the high strength parts in the axial direction of the frame member. The low strength part has a lower strength than the high strength parts. In this case, the stress concentration part is the low strength part (a fourth configuration).

The frame member may further include a plurality of reinforcement member. The plurality of reinforcement members is disposed at intervals in the axial direction of the frame member. The plurality of reinforcement members is provided on at least one of the flat part and the ridge part. In this case, the high strength parts are parts of the frame member in which the reinforcement members are provided. The low strength part is a part of the frame member located between the reinforcement members in the axial direction (a fifth configuration).

The flat part may include a plurality of beads. The plurality of beads is disposed at intervals in the axial direction of the frame member. Each of the beads extends in the axial direction of the frame member. In this case, the high strength parts are parts of the flat part in which the beads are provided. The low strength part is a part of the flat part located between the beads in the axial direction of the frame member (a sixth configuration).

In the following, embodiments of the present disclosure will be described with reference to the drawings. Throughout the drawings, the same or equivalent components are denoted by the same reference numerals, and redundant descriptions thereof will be omitted.

### <First Embodiment>

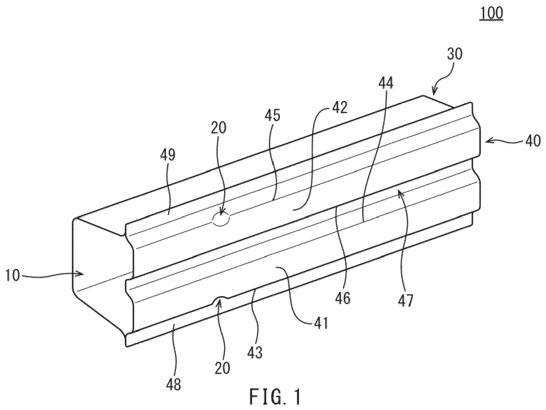

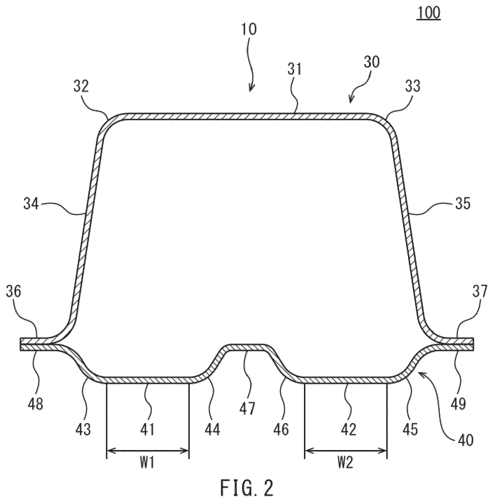

FIG. 1 is a perspective view of a frame member 100 according to a first embodiment. FIG. 2 is a lateral cross-sectional view of the frame member 100 shown in FIG. 1. The lateral cross section of the frame member 100 is a cross section of the frame member 100 taken along a plane perpendicular to an axial direction of the frame member 100. The frame member 100 is used for a body of an automobile, for example. For example, the frame member 100 is a member that is supposed to be subjected to an impact load (compressive load) in the axial direction in a collision of the automobile. The frame member 100 may be a member that extends in a forward and backward direction of the automobile. Although this is not particularly intended to be limiting, the frame member 100 is a side member of an automobile, for example. The frame member 100 may be a front side member or a rear side member.

With reference to FIG. 1, the frame member 100 can be formed by using one or more steel sheets. The frame member 100 is a cylindrical member, for example. The frame member 100 includes a closed cross-section part 10 and a stress concentration part 20.

The closed cross-section part 10 is a part of the frame member 100 whose cross section taken along a plane perpendicular to the axial direction thereof is a closed cross section. In the example of this embodiment, the closed cross-section part 10 extends over the overall length of the frame member 100 in the axial direction. That is, the frame member 100 has a cylindrical shape as a whole. However, the closed cross-section part 10 may extend over a part of the overall length of the frame member 100 in the axial direction. The closed cross-section part 10 preferably extends over 50% or more of the overall length of the frame member 100 in the axial direction, and more preferably extends over 80% or more of the overall length of the frame member 100 in the axial direction.

The frame member 100 includes a first member 30 and a second member 40. The first member 30 and the second member 40 are each formed by a steel sheet. The first member 30 and the second member 40 are each formed by cold press forming of a cold-rolled steel sheet with a tensile strength of 1180 MPa or more, for example. The first member 30 and the second member 40 may be each formed by cold press forming of a cold-rolled steel sheet with a tensile strength of 1470 MPa or more. The frame member 100 is a cold press-formed product.

With reference to FIG. 2, the first member 30 and the second member 40 are included in the closed cross-section part 10 in a lateral cross-sectional view of the frame member 100.

The first member 30 has a substantially hat-like shape in the lateral cross-sectional view of the frame member 100. The first member 30 includes a top sheet 31, ridge parts 32 and 33, side walls 34 and 35 and flanges 36 and 37.

The ridge parts 32 and 33 are continuously provided on opposite sides of the top sheet 31. In the lateral cross-sectional view of the frame member 100, the ridge parts 32 and 33 have a curved shape that protrudes to the outside of the frame member 100. The ridge parts 32 and 33 may have an arc shape in the lateral cross-sectional view of the frame member 100. The ridge parts 32 and 33 are corner parts between the top sheet 31 and the side walls 34 and 35. One side wall 34 is connected to the top sheet 31 by the ridge part 32. The other side wall 35 is connected to the top sheet 31 by the ridge part 33. The top sheet 31, the ridge parts 32 and 33 and the side walls 34 and 35 extend over the overall length of the closed cross-section part 10 in the axial direction of the frame member 100.

The flanges 36 and 37 are connected to the side walls 34 and 35 at the opposite side to the top sheet 31. One flange 36 protrudes from the side wall 34 to the outside of the frame member 100. The other flange 37 protrudes from the side wall 35 to the outside of the frame member 100. The flanges 36 and 37 extend in the axial direction of the frame member 100 along the side walls 34 and 35.

In the closed cross-section part 10, the second member 40 is disposed to substantially seal the opening of the first member 30 on the side of the flanges 36 and 37. The second member 40 includes flat parts 41 and 42, ridge parts 43, 44, 45 and 46, a groove part 47 and flanges 48 and 49.

The flat parts 41 and 42 are disposed to be opposed to the top sheet 31 of the first member 30. The ridge parts 43 and 44 are continuously provided on opposite sides of one flat part 41. The ridge parts 45 and 46 are continuously provided on opposite sides of the other flat part 42. In the lateral cross-sectional view of the frame member 100, the ridge parts 43, 44, 45 and 46 have a curved shape that protrudes to the outside of the frame member 100. The ridge parts 43, 44, 45 and 46 may have an arc shape in the lateral cross-sectional view of the frame member 100. The groove part 47 is disposed between the flat parts 41 and 42. The groove part 47 is formed in the second member 40 in such a manner that the groove part 47 has a shape that is recessed to the inside of the frame member 100 with respect to the flat parts 41 and 42. The flat parts 41 and 42, the ridge parts 43, 44, 45 and 46 and the groove part 47 extend over the overall length of the closed cross-section part 10 in the axial direction of the frame member 100.

The flanges 48 and 49 are opposed to the flanges 36 and 37 of the first member 30, respectively. The flanges 48 and 49 are bonded to the flanges 36 and 37 of the first member 30 by welding, for example. One flange 48 is connected to the ridge part 43 and protrudes to the outside of the frame member 100. The other flange 49 is connected to the ridge part 45 and protrudes to the outside of the frame member 100. The flanges 48 and 49 extend in the axial direction of the frame member 100 along the ridge parts 43 and 45.

The flat parts 41 and 42 each have a substantially straight shape in the lateral cross-sectional view of the frame member 100. More specifically, each of the flat parts 41 and 42 has a radius of curvature that is more than a maximum diametric length across the lateral cross-section of the frame member 100. The maximum diametric length is the greatest of the lengths of straight lines that connect any two points on the contour of the closed cross-section part 10 in the cross section of the frame member 100 perpendicular to the axial direction of the frame member 100. The radius of curvature of each of the ridge parts 43 and 44 continuous to the flat part 41 and the ridge parts 45 and 46 continuous to the flat part 42 is equal to or less than the maximum diametric length across the lateral cross section of the frame member 100.

The flat parts 41 and 42 have widths W1 and W2 in the lateral cross-sectional view of the frame member 100, respectively. The width W1 of the flat part 41 is the line length of the flat part 41 in the lateral cross-section of the frame member 100. For example, in the lateral cross-sectional view of the frame member 100, the line length along the surface of the frame member 100 from a boundary between the ridge part 43 and the flat part 41 (an R end of the ridge part 43) to a boundary between the flat part 41 and the ridge part 44 (an R end of the ridge part 44) may be regarded as the width W1 of the flat part 41. Similarly, the width W2 of the flat part 42 is the line length of the flat part 42 in the lateral cross-section of the frame member 100. For example, in the lateral cross-sectional view of the frame member 100, the line length along the surface of the frame member 100 from a boundary between the ridge part 45 and the flat part 42 (an R end of the ridge part 45) to a boundary between the flat part 42 and the ridge part 46 (an R end of the ridge part 46) may be regarded as the width W2 of the flat part 42.

The width W1 is the width of the flat part 41 measured in a range of 20.0 mm on opposite sides in the axial direction of the frame member 100 from a center of the stress concentration part 20 (FIG. 1) described later. Similarly, the width W2 is the width of the flat part 42 measured in a range of 20.0 mm on opposite sides in the axial direction of the frame member 100 from the center of the stress concentration part 20. The width W1 of the flat part 41 and the width W2 of the flat part 42 are each 70.0 mm or less. The widths W1 and W2 are preferably 60.0 mm or less. The widths W1 and W2 may be 40.0 mm or less. The widths W1 and W2 are 5.0 mm or more, for example. The width W2 of the flat part 42 may be equal to or different from the width W1 of the flat part 41.

The sheet thickness of the flat parts 41 and 42 is 0.7 mm or more and 2.0 mm or less, for example. In this embodiment, the flat parts 41 and 42 have the same sheet thickness. However, the flat parts 41 and 42 may have different sheet thicknesses.

Vickers hardnesses of central portions of the flat parts 41 and 42 in a sheet thickness direction are both 350 Hv or more. For example, when the second member 40 is formed by cold press forming of a steel sheet with a tensile strength of 1180 MPa or more, the Vickers hardnesses of the central portions of the flat parts 41 and 42 in the sheet thickness direction are 350 Hv or more. The Vickers hardnesses of the central portions of the flat parts 41 and 42 in the sheet thickness direction are preferably 380 Hv or more. Although this is not particularly intended to be limiting, the Vickers hardnesses of the central portions of the flat parts 41 and 42 in the sheet thickness direction may be 650 Hv or less. The central portion of the flat part 41 in the sheet thickness direction is a portion of the flat part 41 that is at a distance (depth) of 3/8 of the sheet thickness from the surface in the sheet thickness direction. The central portion of the flat part 42 in the sheet thickness direction is a portion of the flat part 42 that is at a distance (depth) of 3/8 of the sheet thickness from the surface in the sheet thickness direction.

The standard deviation ratios of the Vickers hardness of the flat parts 41 and 42 are each more than 1.0. The standard deviation ratio of the Vickers hardness of the flat part 41 is a value obtained by dividing the standard deviation of the frequency distribution of the Vickers hardness of a near-surface portion of the flat part 41 by the standard deviation of the frequency distribution of the Vickers hardness of the central portion of the flat part 41 in the sheet thickness direction. The standard deviation ratio of the Vickers hardness of the flat part 42 is a value obtained by dividing the standard deviation of the frequency distribution of the Vickers hardness of a near-surface portion of the flat part 42 by the standard deviation of the frequency distribution of the Vickers hardness of the central portion of the flat part 42 in the sheet thickness direction. The near-surface portion of the flat part 41 is a portion of the flat part 41 that is at a distance (depth) of 20.0 µm or more and 70.0 µm or less from the surface in the sheet thickness direction. The near-surface portion of the flat part 42 is a portion of the flat part 42 that is at a distance (depth) of 20.0 µm or more and 70.0 µm or less from the surface in the sheet thickness direction. The standard deviation ratio of the Vickers hardness of each of the flat parts 41 and 42 is preferably more than 1.1, and more preferably more than 1.2. Such a condition of the standard deviation ratio of the Vickers hardness needs to be met by at least one of the near-surface portions on the opposite sides in the sheet thickness direction in each of the flat parts 41 and 42. Preferably, however, the condition of the standard deviation ratio of the Vickers hardness is met by the near-surface portions on the opposite sides in each of the flat parts 41 and 42.

The Vickers hardness of the central portions of the flat parts 41 and 42 in the sheet thickness direction and the standard deviation of the frequency distribution thereof can be measured by the Vickers hardness test defined in JIS Z 2244: 2009. Specifically, the Vickers hardness of the central portions of the flat parts 41 and 42 in the sheet thickness direction and the standard deviation of the frequency distribution thereof are measured as follows. First, a test piece having a cross section that is perpendicular to the sheet surface and includes the flat part 41 is taken from the frame member 100, and the cross section is adjusted as a test surface in accordance with JIS Z 2244: 2009. Similarly, a test piece having a cross section that is perpendicular to the sheet surface and includes the flat part 42 is taken from the frame member 100, and the cross section is adjusted as a test surface in accordance with JIS Z 2244: 2009. More specifically, these test surfaces are polished with silicon carbide paper of #600 to #1500 and then polished to mirror finish using a liquid obtained by dispersing diamond powder of a grain size of 1.0 µm to 6.0 µm in a dilute solution of alcohol or the like or in pure water. The size of the test surfaces of the flat parts 41 and 42 can be 10.0 mm × sheet thickness, for example, For each test surface, using a micro Vickers hardness tester, the Vickers hardness is measured with a test force of 300 gf (2.9 N) at 30 points spaced apart by 3.0 or more times the size of the impressions at a depth of 3/8 of the sheet thickness, thereby obtaining a frequency distribution of the Vickers hardness. From the obtained frequency distribution, a mean value and a standard deviation of the Vickers hardness are calculated. The calculated mean value is the Vickers hardness at the central portions of the flat parts 41 and 42 in the sheet thickness direction, and the calculated standard deviation is the standard deviation of the frequency distribution of the Vickers hardness at the central portions of the flat parts 41 and 42 in the sheet thickness direction.

Similarly, the standard deviation of the frequency distribution of the Vickers hardness of the near-surface portions of the flat parts 41 and 42 can be measured by the Vickers hardness test defined in JIS Z 2244: 2009. Specifically, the standard deviation of the frequency distribution of the Vickers hardness of the near-surface portions of the flat parts 41 and 42 is measured as follows. First, a test piece having a cross section that is perpendicular to the sheet surface and includes the flat part 41 is taken from the frame member 100, and the cross section is adjusted as a test surface in accordance with JIS Z 2244: 2009. In addition, a test piece having a cross section that is perpendicular to the sheet surface and includes the flat part 42 is taken from the frame member 100, and the cross section is adjusted as a test surface in accordance with JIS Z 2244: 2009. More specifically, these test surfaces are polished with silicon carbide paper of #600 to #1500 and then polished to mirror finish using a liquid obtained by dispersing diamond powder of a grain size of 1.0 µm to 6.0 µm in a dilute solution of alcohol or the like or in pure water. The size of the test surfaces of the flat parts 41 and 42 can be 10.0 mm × sheet thickness, for example. For each test surface, using a micro Vickers hardness tester, the Vickers hardness is measured with a test force of 300 gf (2.9 N) at 30 points spaced apart by 3.0 or more times the size of the impressions at any depth of 20.0 µm or more and 70.0 µm or less from the surface, thereby obtaining a frequency distribution of the Vickers hardness. From the obtained frequency distribution, a standard deviation of the Vickers hardness is calculated. The calculated standard deviation is the standard deviation of the frequency distribution of the Vickers hardness of the near-surface portions of the flat parts 41 and 42.

When the central portions in the sheet thickness direction and the near-surface portions of the flat parts 41 and 42 have a same metal micro-structure, the frequency distribution of the Vickers hardness of the near-surface portion is the same as the frequency distribution of the Vickers hardness of the central portion in the sheet thickness direction, and the standard deviation ratio of the Vickers hardness of each of the flat parts 41 and 42 is 1.0. On the other hand, when the metal micro-structure of the near-surface portions of the flat parts 41 and 42 and vicinities thereof is reformed, the standard deviation ratio of the Vickers hardness of each of the flat parts 41 and 42 is a value different from 1.0. In this embodiment, for example, for the second member 40 formed by cold press forming of a steel sheet, the metal micro-structure of the near-surface portion of the steel sheet and vicinities thereof is reformed, so that the metal micro-structure of the near-surface portion is similar to a duplex micro-structure. Therefore, the Vickers hardness substantially varies in the near-surface portion of the steel sheet, and the standard deviation ratio of the Vickers hardness between the central portions in the sheet thickness direction and the near-surface portions of the flat parts 41 and 42 can be more than 1.0. The standard deviation ratio can be controlled by adjusting the maximum heating temperature and the retention time (dwell time) during decarburizing annealing of the steel sheet, for example. The conditions of the decarburizing annealing are preferably that the atmosphere is a humid atmosphere containing hydrogen, nitrogen or oxygen, the decarburizing annealing temperature (the highest temperature achieved of the steel sheet) is 700°C to 950°C, and the dwell time in the temperature range of 700°C to 950°C is 5 seconds to 1200 seconds. The standard deviation ratio can be increased to more than 1.2 by further raising the annealing temperature or further elongating the dwell time in these condition ranges.

Referring back to FIG. 1, the stress concentration part 20 is provided in the ridge part 43 continuous to the flat part 41. The stress concentration part 20 is also provided in the ridge part 45 continuous to the flat part 42. These stress concentration parts 20 are configured so that stress concentration occurs at the stress concentration parts when a compressive load is applied to the frame member 100 in the axial direction. The stress concentration parts 20 are configured so that the frame member 100 is bent at the stress concentration parts 20 with the flat parts 41 and 42 as the inner side of the bend under a compressive load in the axial direction.

In this embodiment, the stress concentration part 20 corresponding to the flat part 41 is a recessed portion formed in the ridge part 43 on the side of the flange 48. The recessed portion serving as the stress concentration part 20 may be formed in the ridge part 44 on the side of the groove part 47. The stress concentration part 20 having the recessed shape is formed in at least one of the ridge parts 43 and 44 that are continuous to the flat part 41. A plurality of stress concentration parts 20 arranged side by side in the axial direction of the frame member 100 may be provided in one or both of the ridge parts 43 and 44.

In this embodiment, the stress concentration part 20 corresponding to the flat part 42 is a recessed portion formed in the ridge part 45 on the side of the flange 49. The recessed portion serving as the stress concentration part 20 may be formed in the ridge part 46 on the side of the groove part 47. The stress concentration part 20 having the recessed shape is formed in at least one of the ridge parts 45 and 46 that are continuous to the flat part 42. A plurality of stress concentration parts 20 arranged side by side in the axial direction of the frame member 100 may be provided in one or both of the ridge parts 45 and 46.

### [Effects]

With the frame member 100 according to this embodiment, the widths W 1 and W2 of the flat parts 41 and 42 provided in the closed cross-section part 10 are set to be 70.0 mm or less. The flat parts 41 and 42 have widths W1 and W2 of 70.0 mm or less at least in a range of ±20.0 mm in the axial direction of the frame member 100 from the center of the stress concentration part 20. As a result, when a compressive load is applied to the frame member 100 in the axial direction, elastic buckling is less likely to occur in the flat parts 41 and 42 at least in the vicinity of the stress concentration parts 20, and the load on (yield strength of) the flat parts 41 and 42 is ensured. In this case, the frame member 100 is likely to be bent at the stress concentration parts 20, and a desired deformation behavior of the frame member 100 is likely to be achieved. In addition, since the widths W1 and W2 of the flat parts 41 and 42 are 70.0 mm or less, the frame member 100 can be compactly folded at the stress concentration parts 20. More specifically, when a compressive load is applied to the frame member 100, the frame member 100 is bent with the flat parts 41 and 42 as the inner side of the bend, and the flat parts 41 and 42 are sharply folded. In this way, in each of the folded flat parts 41 and 42, adjacent regions can be brought into contact with each other, thereby increasing the load after the bending and deformation. As a result, the frame member 100 can deliver excellent energy absorption performance.

In this embodiment, the stress concentration parts 20 are recessed portions formed in the ridge parts 43 and 45 continuous to the flat parts 41 and 42, respectively. When a compressive load in the axial direction is applied to the frame member 100 in a collision of the automobile in which the frame member 100 is used, for example, the frame member 100 can be bent and deformed at the stress concentration parts 20 having the recessed shape. The stress concentration parts 20 having the recessed shape may extend from the ridge parts 43 and 45 to the flat parts 41 and 42. For example, the recessed portion serving as the stress concentration part 20 may be provided across the flat part 41 from the ridge part 43 on the side of the flange 48 to the ridge part 44 on the side of the groove part 47. Similarly, the recessed portion serving as the stress concentration part 20 may be provided across the flat part 42 from the ridge part 45 on the side of the flange 49 to the ridge part 46 on the side of the groove part 47. The recessed portion serving as the stress concentration part 20 may be provided only in the flat part 41 or 42.

The stress concentration part 20 may be a projecting portion provided on one or more of the ridge parts 43, 44, 45 and 46 continuous to the flat parts 41 and 42. In this case, when a compressive load in the axial direction is applied to the frame member 100, the frame member 100 can be bent and deformed at the root of the stress concentration parts 20 having the projecting shape. The stress concentration parts 20 having the projecting shape may extend to the flat parts 41 and 42. For example, the projecting portion serving as the stress concentration part 20 may be provided across the flat part 41 from the ridge part 43 on the side of the flange 48 to the ridge part 44 on the side of the groove part 47. Similarly, the projecting portion serving as the stress concentration part 20 may be provided across the flat part 42 from the ridge part 45 on the side of the flange 49 to the ridge part 46 on the side of the groove part 47. The projecting portion serving as the stress concentration part 20 may be provided only on the flat part 41 or 42.

In this embodiment, the stress concentration part 20 is provided for both the flat parts 41 and 42. However, the stress concentration part 20 may be provided for only one of the flat parts 41 and 42. That is, it is possible that the stress concentration part 20 having the recessed or projecting shape is provided in one or more of the flat part 41 and the ridge parts 43 and 44, while the stress concentration part 20 having the recessed or projecting shape is not provided in the flat part 42 and the ridge parts 45 and 46. Similarly, it is also possible that the stress concentration part 20 having the recessed or projecting shape is provided in one or more of the flat part 42 and the ridge parts 45 and 46, while the stress concentration part 20 having the recessed or projecting shape is not provided in the flat part 41 and the ridge parts 43 and 44.

With the frame member 100 according to this embodiment, the standard deviation ratio of the frequency distribution of the Vickers hardness between the central portions in the sheet thickness direction and the near-surface portions of the flat parts 41 and 42 is more than 1.0. That is, the metal micro-structure of the near-surface portions of the flat parts 41 and 42 is different from the metal micro-structure of the central portions in the sheet thickness direction. As a result, the bending performance of the flat parts 41 and 42 can be improved. Therefore, when the frame member 100 is bent and deformed with the flat parts 41 and 42 as the inner side of the bend, a rupture is less likely to occur in the flat parts 41 and 42 during deformation, and desired bending and deformation starting at the stress concentration part 20 can be caused in the frame member 100. Therefore, the energy absorption performance of the frame member 100 can be improved. In this embodiment, in particular, since the elastic buckling of the flat parts 41 and 42 is prevented by setting the widths W1 and W2 of the flat parts 41 and 42 to 70.0 mm or less, and a rupture of the flat parts 41 and 42 is prevented by improving the bending performance of the flat parts 41 and 42 themselves, the frame member 100 can deliver excellent energy absorption efficiency. In addition, since the second member 40 including the flat parts 41 and 42 is formed by a high strength material having a Vickers hardness of 350 Hv or more at the central portion thereof, at least the second member 40 can be reduced in thickness. Therefore, a lightweight frame member 100 can be provided.

With the frame member 100 according to this embodiment, the second member 40 includes the flat parts 41 and 42 having the widths W1 and W2 of 70.0 mm or less and the stress concentration part 20. For the second member 40, a material is used whose standard deviation ratio of the Vickers hardness between the central portion in the sheet thickness direction and the near-surface portion is more than 1.0 and whose Vickers hardness in the central portion in the sheet thickness direction is 350 Hv or more. On the other hand, the first member 30 does not include the stress concentration part 20, and therefore, the first member 30 does not necessarily have to be formed by the same material as the second member 40. The material of the first member 30 may be the same as or different from the material of the second member 40.

In this embodiment, the flat parts 41 and 42 having the widths W1 and W2 of 70.0 mm or less are formed in the second member 40 by dividing the bottom sheet of the second member 40 opposed to the top sheet 31 of the first member 30 by the groove part 47. However, when the overall width of the bottom sheet of the second member 40 is 70.0 mm or less, for example, the groove part 47 does not have to be provided in the second member 40. On the other hand, when the bottom sheet of the second member 40 has a greater width, a plurality of groove parts 47 may be provided in the second member 40.

### <Second Embodiment>

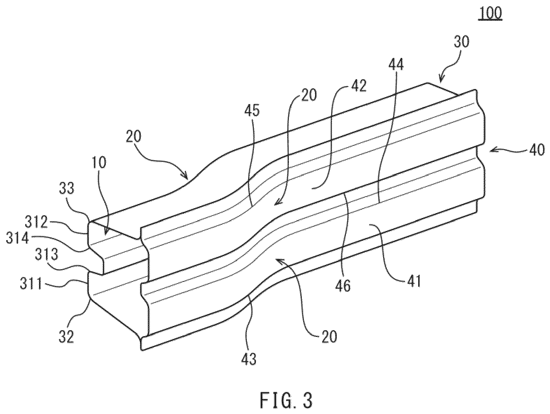

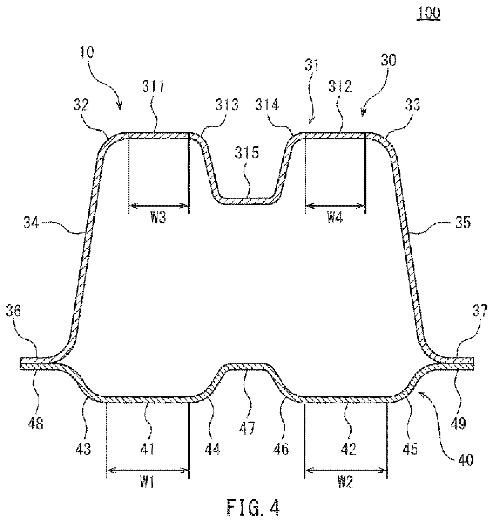

FIG. 3 is a perspective view of a frame member 100 according to a second embodiment. FIG. 4 is a cross-sectional view (lateral cross-sectional view) of the frame member 100 shown in FIG. 3 taken along a plane perpendicular to the axial direction of the frame member 100.

In this embodiment, as shown in FIG. 3, the frame member 100 also includes a closed cross-section part 10 and a stress concentration part 20. As in the first embodiment, the frame member 100 includes a first member 30 and a second member 40. Unlike the first embodiment, a stress concentration part 20 is provided not only in the second member 40 but also in the first member 30.

With reference to FIG. 4, the second member 40 has substantially the same configuration as the second member 40 (FIG. 2) in the first embodiment described above, in the lateral cross-sectional view of the frame member 100. On the other hand, the first member 30 is different from the first member 30 (FIG. 2) in the first embodiment described above primarily in the shape of the top sheet 31. In this embodiment, the top sheet 31 of the first member 30 includes flat parts 311 and 312, ridge parts 313 and 314 and a groove part 315.

The flat parts 311 and 312 each have a substantially straight shape in the lateral cross-sectional view of the frame member 100. Each of the flat parts 311 and 312 has a radius of curvature that is more than a maximum diametric length across the cross-section of the frame member 100, as with the flat parts 41 and 42 of the second member 40. The ridge part 313 is provided to be continuous to the flat part 311. The ridge part 314 is provided to be continuous to the flat part 312. In the lateral cross-sectional view of the frame member 100, the ridge parts 313 and 314 have a curved shape that protrudes to the outside of the frame member 100. The ridge parts 313 and 314 may have an arc shape in the lateral cross-sectional view of the frame member 100. The radius of curvature of each of the ridge parts 313 and 314 is equal to or less than the maximum diametric length across the lateral cross section of the frame member 100. The groove part 315 is disposed between the flat parts 311 and 312. The groove part 315 is formed in the first member 30 in such a manner that the groove part 315 has a shape that is recessed to the inside of the frame member 100 with respect to the flat parts 311 and 312. The flat parts 311 and 312, the ridge parts 313 and 314 and the groove part 47 extend over the overall length of the closed cross-section part 10 in the axial direction of the frame member 100.

The flat parts 311 and 312 have widths W3 and W4 in the lateral cross-sectional view of the frame member 100, respectively. The width W3 of the flat part 311 is the line length of the flat part 311 in the lateral cross-section of the frame member 1 00. For example, in the lateral cross-sectional view of the frame member 100, the line length along the surface of the frame member 100 from a boundary between the ridge part 32 and the flat part 311 (an R end of the ridge part 32) to a boundary between the flat part 311 and the ridge part 313 (an R end of the ridge part 313) may be regarded as the width W3 of the flat part 311. Similarly, the width W4 of the flat part 312 is the line length of the flat part 312 in the lateral cross-section of the frame member 100. For example, in the lateral cross-sectional view of the frame member 100, the line length along the surface of the frame member 100 from a boundary between the ridge part 33 and the flat part 312 (an R end of the ridge part 33) to a boundary between the flat part 312 and the ridge part 314 (an R end of the ridge part 314) may be regarded as the width W4 of the flat part 312.

The width W3 is the width of the flat part 311 measured in a range of 20.0 mm on opposite sides in the axial direction of the frame member 100 from a center of the stress concentration part 20 of the first member 30. Similarly, the width W4 is the width of the flat part 312 measured in a range of 20.0 mm on opposite sides in the axial direction of the frame member 100 from the center of the stress concentration part 20 of the first member 30. The width W3 of the flat part 311 and the width W4 of the flat part 312 are each 70.0 mm or less. The widths W3 and W4 are preferably 60.0 mm or less. The widths W3 and W4 may be 40.0 mm or less. The widths W3 and W4 are 5.0 mm or more, for example. The widths W3 and W4 may be equal to or different from each other.

Vickers hardnesses of central portions of the flat parts 311 and 312 in the sheet thickness direction are both 350 Hv or more. For example, when the first member 30 is formed by cold press forming of a steel sheet with a tensile strength of 1180 MPa or more, the Vickers hardnesses of the central portions of the flat parts 311 and 312 in the sheet thickness direction are 350 Hv or more. The Vickers hardnesses of the central portions of the flat parts 311 and 312 in the sheet thickness direction are preferably 380 Hv or more. Although this is not particularly intended to be limiting, the Vickers hardnesses of the central portions of the flat parts 311 and 312 in the sheet thickness direction may be 650 Hv or less. The central portion of the flat part 311 in the sheet thickness direction is a portion of the flat part 311 that is at a distance (depth) of 3/8 of the sheet thickness from the surface in the sheet thickness direction. The central portion of the flat part 312 in the sheet thickness direction is a portion of the flat part 312 that is at a distance (depth) of 3/8 of the sheet thickness from the surface in the sheet thickness direction.

The standard deviation ratios of the Vickers hardness of the flat parts 311 and 312 are each more than 1.0. The standard deviation ratio of the Vickers hardness of the flat part 311 is a value obtained by dividing the standard deviation of the frequency distribution of the Vickers hardness of a near-surface portion of the flat part 311 by the standard deviation of the frequency distribution of the Vickers hardness of the central portion of the flat part 311 in the sheet thickness direction. The standard deviation ratio of the Vickers hardness of the flat part 312 is a value obtained by dividing the standard deviation of the frequency distribution of the Vickers hardness of a near-surface portion of the flat part 312 by the standard deviation of the frequency distribution of the Vickers hardness of the central portion of the flat part 312 in the sheet thickness direction. The near-surface portion of the flat part 311 is a portion of the flat part 311 that is at a distance (depth) of 20.0 µm or more and 70.0 µm or less from the surface in the sheet thickness direction. The near-surface portion of the flat part 312 is a portion of the flat part 312 that is at a distance (depth) of 20.0 µm or more and 70.0 µm or less from the surface in the sheet thickness direction. The standard deviation ratio of the Vickers hardness of each of the flat parts 311 and 312 is preferably more than 1.1, and more preferably more than 1.2. Such a condition of the standard deviation ratio of the Vickers hardness needs to be met by at least one of the near-surface portions on the opposite sides in the sheet thickness direction in each of the flat parts 311 and 312. Preferably, however, the condition of the standard deviation ratio of the Vickers hardness is met by the near-surface portions on the opposite sides in each of the flat parts 311 and 312.

With the first member 30 formed by cold press forming of a steel sheet, for example, the standard deviation ratio of the Vickers hardness of the flat parts 311 and 312 can be made to be more than 1.0 by reforming the metal micro-structure of the near-surface portion of the steel sheet and vicinities thereof, as with the second member 40. That is, as described in the first embodiment, for example, the standard deviation ratio of the Vickers hardness of the flat parts 311 and 312 can be controlled by adjusting the maximum heating temperature and the retention time during decarburizing annealing of the steel sheet.

The Vickers hardness of the central portions of the flat parts 311 and 312 in the sheet thickness direction and the standard deviation of the frequency distribution thereof can be measured in the same manner as the flat parts 41 and 42 of the second member 40. The standard deviation of the frequency distribution of the Vickers hardness of the near-surface portions of the flat parts 311 and 312 can be measured in the same manner as the flat parts 41 and 42 of the second member 40.

Referring back to FIG. 3, a stress concentration part 20 is provided in each of the flat parts 311 and 312 of the first member 30. More specifically, bent portions that are bent (curved) to be recessed toward the second member 40 when viewed from the side of the ridge part 32 or 33 is provided in the flat parts 311 and 312 of the first member 30. The bent portions are stress concentration parts 20 corresponding to the flat parts 311 and 312. When a compressive load in the axial direction is applied to the frame member 100, the frame member 100 can be bent and deformed at the stress concentration parts 20, which are bent portions, with the flat parts 311 and 312 as the inner side of the bend. The ridge parts 32 and 313 continuous to the flat part 311 and the ridge parts 33 and 314 continuous to the flat part 312 are also partially bent along the flat parts 311 and 312.

A stress concentration part 20 that is different from the stress concentration part 20 in the first embodiment is provided in each of the flat parts 41 and 42 of the second member 40. bent portions that are bent (curved) to be recessed toward the first member 30 when viewed from the side of the ridge part 43 or 45 is provided in the flat parts 41 and 42 of the second member 40. The bent portions are stress concentration parts 20 corresponding to the flat parts 41 and 42. When a compressive load in the axial direction is applied to the frame member 100, the frame member 100 can be bent and deformed at the stress concentration parts 20, which are bent portions, with the flat parts 41 and 42 as the inner side of the bend. The ridge parts 43 and 44 continuous to the flat part 41 and the ridge parts 45 and 46 continuous to the flat part 42 are also partially bent along the flat parts 41 and 42.

The frame member 100 according to this embodiment can provide the same effects as the frame member 100 according to the first embodiment. Specifically, in this embodiment, since the widths W3 and W4 of the flat parts 311 and 312 provided in the first member 30 are 70.0 mm or less, the flat parts 311 and 312 can be compactly folded at the stress concentration parts 20 when a compressive load is applied to the frame member 100 in the axial direction. In addition, since the widths W 1 and W2 of the flat parts 41 and 42 provided in the second member 40 are 70.0 mm or less, the flat parts 41 and 42 can be compactly folded at the stress concentration parts 20 when a compressive load is applied to the frame member 100 in the axial direction. Therefore, the frame member 100 can deliver excellent energy absorption performance.

In this embodiment, in the flat parts 311 and 312 of the first member 30 and the flat parts 41 and 42 of the second member 40, the standard deviation ratio of the frequency distribution of the Vickers hardness between the central portion in the sheet thickness direction and the near-surface portion is more than 1.0. That is, each of the flat parts 311, 312, 41 and 42 has an excellent bending performance. Therefore, when the frame member 100 is bent and deformed with the flat parts 311 and 312 of the first member 30 as the inner side of the bend, a rupture is less likely to occur in the flat parts 311 and 312 during deformation, and desired bending and deformation starting at the stress concentration parts 20 can be caused in the flat parts 311 and 312. Similarly, when the frame member 100 is bent and deformed with the flat parts 41 and 42 of the second member 40 as the inner side of the bend, a rupture is less likely to occur in the flat parts 41 and 42 during deformation, and desired bending and deformation starting at the stress concentration parts 20 can be caused in the flat parts 41 and 42. In this way, the energy absorption performance of the frame member 100 can be improved. In addition, since the first member 30 and the second member 40 are formed by a high strength material having a Vickers hardness of 350 Hv or more at the central portion thereof, the first member 30 and the second member 40 can be reduced in thickness. Therefore, a lightweight frame member 100 can be provided.

The stress concentration parts 20 of the frame member 100 according to this embodiment are bent portions provided in the flat parts 311, 312, 41 and 42. The flat parts 311, 312, 41 and 42 are partially bent in side view of the frame member 100. However, the flat parts 311, 312, 41 and 42 may have a bent portion that is bent when viewed in the sheet thickness direction as the stress concentration part 20, for example. The flat parts 311, 312, 41 and 42 have only to be configured so that the frame member 100 can be bent at the bent portions serving as the stress concentration parts 20 when a compressive load in the axial direction is applied to the frame member 100.

In this embodiment, the flat parts 311 and 312 having the widths W3 and W4 of 70.0 mm or less are formed in the first member 30 by dividing the top sheet 31 by the groove part 315. However, when the overall width of the top sheet 31 is 70.0 mm or less, for example, the groove part 315 does not have to be provided in the first member 30. On the other hand, when the top sheet 31 has a greater width, a plurality of groove parts 315 may be provided in the first member 30. The number of the groove parts 47 in the second member 40 can also be adjusted in accordance with the width of the bottom sheet, for example, as in the first embodiment.

### <Third Embodiment>

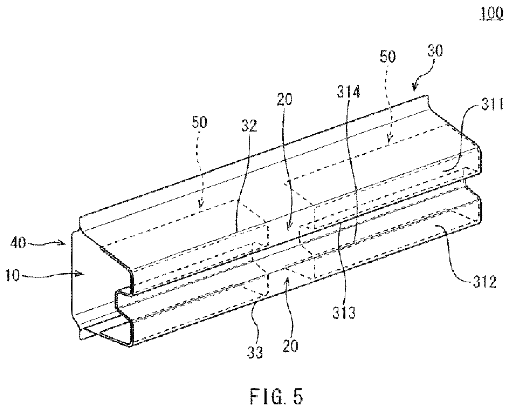

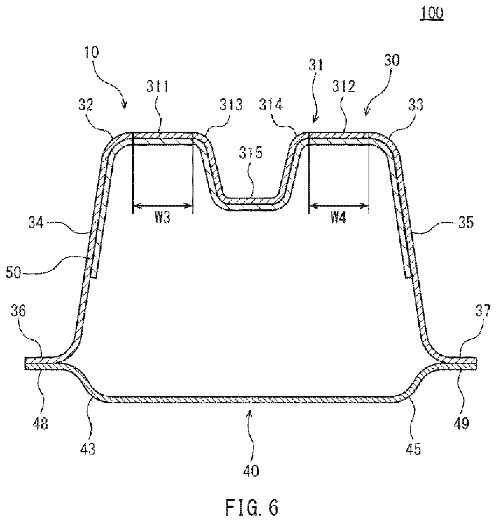

FIG. 5 is a perspective view of a frame member 100 according to a third embodiment. FIG. 6 is a cross-sectional view (lateral cross-sectional view) of the frame member 100 shown in FIG. 5 taken along a plane perpendicular to the axial direction of the frame member 100.

As shown in FIG. 5, the frame member 100 according to this embodiment includes a plurality of reinforcement members 50 in addition to a first member 30 and a second member 40. The reinforcement members 50 are disposed at intervals in the axial direction of the frame member 100.

In this embodiment, the first member 30 includes flat parts 311 and 312. Each of the reinforcement members 50 is bonded to the first member 30 by welding, for example. In this embodiment, the reinforcement members 50 are disposed inside the hollow frame member 100. However, the reinforcement members 50 may be disposed outside the frame member 100.

With reference to FIG. 6, the reinforcement members 50 are provided along at least a part of the first member 30 in the lateral cross-sectional view of the frame member 100. The reinforcement members 50 are provided in a region of the first member 30 that includes the flat parts 311 and 312 and ridge parts 313, 314, 32 and 33. In the lateral cross-sectional view of the frame member 100, the reinforcement members 50 reinforce the flat parts 311 and 312 and the ridge parts 313, 314, 32 and 33 from inside of the first member 30. In the lateral cross-sectional view of the frame member 100, the reinforcement members 50 extend from a side wall 34 on the side of the flat part 311 to a side wall 35 on the side of the flat part 312. The reinforcement members 50 are formed by a steel sheet, for example. The material and sheet thickness of the reinforcement members 50 may be the same as or different from the first member 30 or the second member 40.

Referring back to FIG. 5, the parts of the frame member 100 in which the reinforcement members 50 are provided are high strength parts having a relatively high strength. A part of the frame member 100 that is located between the reinforcement members 50 in the axial direction is a low strength part having a lower strength than the high strength parts. That is, the low strength part is a part of the flat parts 311 and 312 and the ridge part 313, 314, 32 and 33 that is not reinforced by the reinforcement members 50, and has a relatively low strength compared with the high strength parts that are reinforced by the reinforcement members 50. In this embodiment, the low strength part serves as a stress concentration part 20. When a compressive load in the axial direction is applied to the frame member 100, the frame member 100 is bent at the stress concentration part 20 having a relatively low strength. The frame member 100 according to this embodiment can also achieve the same effects as those of the embodiments described above.

In this embodiment, the reinforcement members 50 are provided on the flat part 311 and the ridge parts 313 and 32 continuous to the flat part 311. However, the reinforcement members 50 may be provided only on the flat part 311 or may be provided only on at least one of the ridge parts 313 and 32. Similarly, the reinforcement members 50 do not necessarily have to be provided on both the flat part 312 and the ridge parts 314 and 33 continuous to the flat part 312. For example, the reinforcement members 50 may be provided only on the flat part 312 or may be provided only on at least one of the ridge parts 314 and 33.

The frame member 100 according to this embodiment includes two reinforcement members 50. However, the frame member 100 may include three or more reinforcement members 50. That is, three or more reinforcement members 50 may be disposed at intervals in the axial direction of the frame member 100.

With the frame member 100 according to this embodiment, the first member 30 includes the flat parts 311 and 312 having widths W3 and W4 of 70.0 mm or less and the stress concentration part 20. Therefore, for the first member 30, a material is used whose standard deviation ratio of the Vickers hardness between the central portion in the sheet thickness direction and the near-surface portion is more than 1.0 and whose Vickers hardness in the central portion in the sheet thickness direction is 350 Hv or more. On the other hand, the second member 40 does not include the stress concentration part 20, and therefore, the second member 40 does not necessarily have to be formed by the same material as the first member 30. The material of the second member 40 may be the same as or different from the material of the first member 30.

### <Fourth Embodiment>

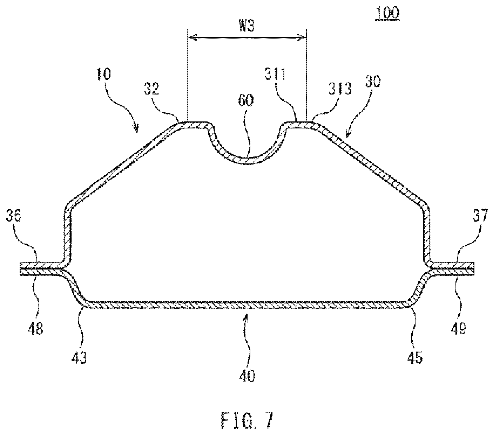

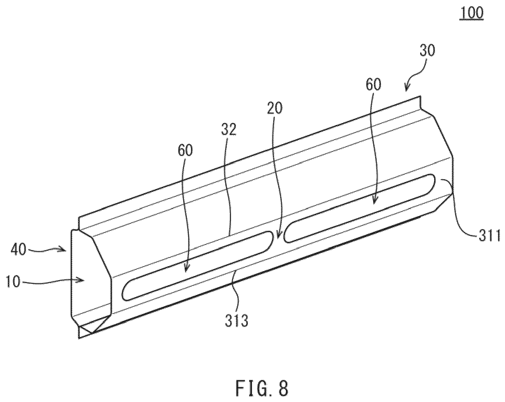

FIG. 7 is a cross-sectional view (lateral cross-sectional view) of a frame member 100 according to a fourth embodiment taken along a plane perpendicular to the axial direction of the frame member 100. FIG. 8 is a perspective view of the frame member 100 shown in FIG. 7.

With reference to FIG. 7, the frame member 100 according to this embodiment is different from the frame members according to the other embodiments in overall lateral cross-sectional shape. The closed cross section defined by the first member 30 and the second member 40 of the frame members 100 according to the other embodiments has a substantially rectangular shape. On the other hand, the closed cross section defined by a first member 30 and a second member 40 of the frame member 100 according to this embodiment has a substantially octagonal shape. However, the frame member 100 may have another polygonal shape in lateral cross-sectional view. In this embodiment, a flat part 311 having a width W3 of 70.0 mm or less is formed in the first member 30.

With reference to FIGS. 7 and 8, the flat part 311 of the first member 30 includes a plurality of beads 60. The plurality of beads 60 is disposed at intervals in the axial direction of the frame member 100. Each of the beads 60 extends in the axial direction of the frame member 100.

Each bead 60 has a shape that is recessed to the inside of the frame member 100. Each bead 60 may have a shape that protrudes to the outside of the frame member 100. The parts of the flat part 311 in which the beads 60 are provided are high strength parts having a high strength compared with the other parts. A part of the flat part 311 that is located between the beads 60 in the axial direction of the frame member 100 is a low strength part having a relatively low strength compared with the parts in which the beads 60 are provided. In this embodiment, the low strength part serves as a stress concentration part 20. When a compressive load in the axial direction is applied to the frame member 100, the frame member 100 is bent at the stress concentration part 20 having a relatively low strength. The frame member 100 according to this embodiment can also achieve the same effects as those of the embodiments described above.

With the frame member 100 according to this embodiment, two beads 60 are provided in the flat part 311. However, three or more beads 60 may be provided in the flat part 311. That is, three or more beads 60 may be disposed at intervals in the axial direction of the frame member 100.

In the third embodiment, a plurality of reinforcement members 50 is disposed at intervals in the axial direction of the frame member 100, thereby forming a plurality of high strength parts and a low strength part between the high strength parts on each of the flat parts 311 and 312. In the fourth embodiment, a plurality of beads 60 is disposed at intervals in the axial direction of the frame member 100, thereby forming a plurality of high strength parts and a low strength part between the high strength parts on the flat part 311. However, the manner of providing a high strength part and a low strength part on at least one of a flat part and a ridge part continuous to the flat part is not limited to these manners.

For example, a high strength part and a low strength part can be formed by changing the tensile strength or sheet thickness of at least one of a flat part and a ridge part continuous to the flat part included in the closed cross-section part of the frame member. Specifically, a plurality of high strength parts that is formed by a material having a relatively high tensile strength and a low strength part that is formed by a material having a low tensile strength compared with the high strength parts and disposed between the high strength parts can be provided in a flat part and/or a ridge part continuous to the flat part. Alternatively, a plurality of high strength parts that is formed by a material having a relatively large sheet thickness and a low strength part that is formed by a material having a small sheet thickness compared with the high strength parts and disposed between the high strength parts can be provided in a flat part and/or a ridge part continuous to the flat part. Both the tensile strength and the sheet thickness of the low strength part may be less than those of each high strength part in a flat part and/or a ridge part continuous to the flat part. In these cases, the low strength part serving as the stress concentration part can also be formed in the frame member.

With the frame member 100 according to this embodiment, as in the third embodiment, the first member 30 includes the flat part 311 having a width W3 of 70.0 mm or less and the stress concentration part 20. Therefore, for the first member 30, a material is used whose standard deviation ratio of the Vickers hardness between the central portion in the sheet thickness direction and the near-surface portion is more than 1.0 and whose Vickers hardness in the central portion in the sheet thickness direction is 350 Hv or more. On the other hand, the second member 40 does not include the stress concentration part 20, and therefore, the second member 40 does not necessarily have to be formed by the same material as the first member 30. The material of the second member 40 may be the same as or different from the material of the first member 30.

Although embodiments according to the present disclosure have been described, the present disclosure is not limited to the embodiments described above, and various modifications can be made without departing from the spirit of the present disclosure.

In the first to third embodiments described above, in the closed cross-section part of the frame member, a plurality of flat parts having a width of 70.0 mm or less is provided in the lateral cross-sectional view. In the first to third embodiments, a stress concentration part at which bending and deformation of the frame member starts is provided for each of the flat parts. However, when the closed cross-section part of the frame member includes a plurality of flat parts, the stress concentration part does not need to be provided for every flat part. The stress concentration part has only to be provided for one or more flat parts.

The frame members according to the first to third embodiments described above have a substantially rectangular lateral cross-sectional shape. On the other hand, the frame member according to the fourth embodiment has a substantially octagonal lateral cross-sectional shape. The lateral cross-sectional shape of the frame member according to the fourth embodiment may be adopted in the first to third embodiments. Alternatively, in the first to third embodiments, a lateral cross-sectional shape of the frame member according to an embodiment other than the fourth embodiment may be adopted. Furthermore, the lateral cross-sectional shape of the frame member according to any of the first to third embodiment can also be adopted in the fourth embodiment. The frame member may have a lateral cross-sectional shape other than the shapes described in the first to fourth embodiment. Any frame member is possible as far as the closed cross-section part includes at least one flat part having a width of 70.0 mm or less.

In each of the embodiments described above, an example in which the frame member has a substantially uniform lateral cross-sectional shape over the overall length in the axial direction thereof has been described. However, the lateral cross-sectional shape of the frame member may vary in the axial direction.

In each of the embodiments described above, the frame member is formed by the first member and the second member. However, the frame member may be formed by a single member. For example, the frame member may be formed by cold press-forming one steel sheet and then bonding the edges thereof to form a cylindrical shape.

### EXAMPLES

In the following, the present disclosure will be described in more detail with reference to examples. However, the present disclosure is not limited to the examples described below.

### [First Example]

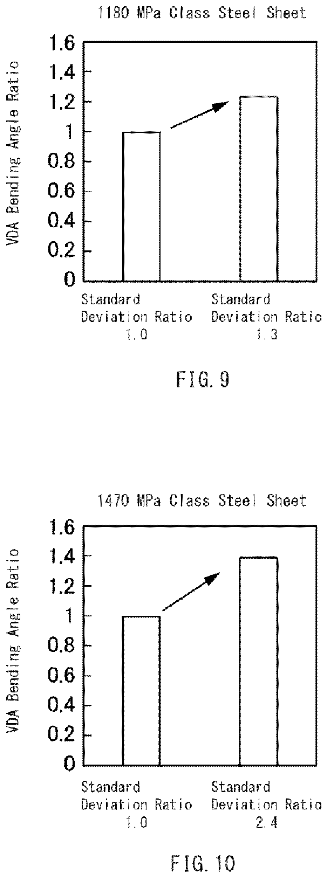

To check the difference in bending performance of steel sheets due to the standard deviation ratio of the Vickers hardness, the sheet bending test (VDA bending test) standardized as VDA238-100 by German Automobile Industry Association (VDA) was performed. In the VDA bending test, for each of a cold rolled steel sheet having a sheet thickness of 1.6 mm and a tensile strength of 1180 MPa class and a cold rolled steel sheet having a sheet thickness of 1.6 mm and a tensile strength of 1470 MPa class, the standard deviation ratio of the Vickers hardness (the standard deviation of the frequency distribution of the Vickers hardness of the near-surface portion/the standard deviation of the frequency distribution of the Vickers hardness of the central portion in the sheet thickness direction) was changed, and the maximum bending angle (°) was checked. FIGS. 9 and 10 show a result of the VDA bending test.

FIG. 9 shows a test result of the cold rolled steel sheet having a tensile strength of 1 180 MPa class, and FIG. 10 shows a test result of the cold rolled steel sheet having a tensile strength of 1470 MPa class. In FIGS. 9 and 10, the ordinate indicates the ratio of the maximum bending angle to that in the case where the standard deviation ratio is 1.0. From FIGS. 9 and 10, it can be seen that for each strength class steel sheet, when the standard deviation ratio of the Vickers hardness is significantly more than 1.0, the maximum bending angle in the VDA bending test increases compared with the case where the standard deviation ratio is 1.0. In other words, when the standard deviation ratio of the Vickers hardness is more than 1.0, it can be said that the bending performance of the steel sheet is improved. Therefore, a rupture is less likely to occur during defonnation of the frame member. For example, when the standard deviation ratio of the Vickers hardness is more than 1.2, the bending performance of the steel sheet is further improved.

### [Second Example]

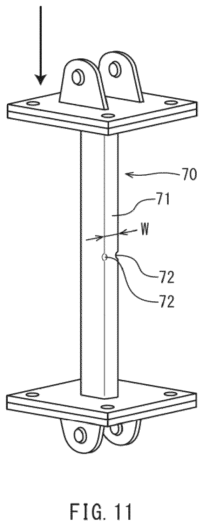

To check the relationship between the standard deviation ratio of the Vickers hardness and the width of the flat part corresponding to the stress concentration part, a CAE analysis was performed using conventional structure analysis software (LS-DYNA, available from LSTC). FIG.11 schematically shows a model used in this analysis.

Referring to FIG. 11, in this analysis, in a state where a member 70 having a cylindrical shape was locked at one end in the axial direction, an impactor was made to collide with the member 70 from the side of the other end at a collision speed of 1.0 in/s, thereby exerting a compressive load in the axial direction to the member 70. The member 70 included a flat part 71 on the side of compression by bending. A bead having a recessed shape (stress concentration part) 72 was provided in each of ridge parts continuously provided on opposite sides of the flat part 71. The material of the member 70 was a steel sheet having a sheet thickness of 1.6 mm and a tensile strength of 1470 MPa. The Vickers hardness of the central portion in the sheet thickness direction of the member 70 was 350 Hv or more.

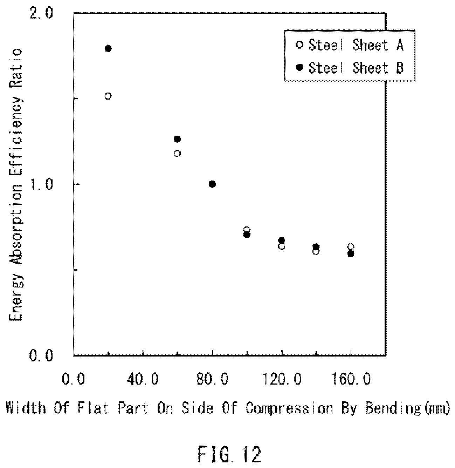

In this analysis, the relationship between the width W of the flat part 71 and the energy absorption efficiency of the member 70 was examined for both the case where a steel sheet A was used whose standard deviation ratio of the Vickers hardness(the standard deviation of the frequency distribution of the Vickers hardness of the near-surface portion/the standard deviation of the frequency distribution of the Vickers hardness of the central portion in the sheet thickness direction) was 1.0 and the case where a steel sheet B was used whose standard deviation ratio of the Vickers hardness was more than 1.0. FIG. 12 shows a result of this analysis.

In the graph of FIG. 12, the abscissa indicates the width W (FIG. 11) of the flat part 71 on the side of compression by bending, and the ordinate indicates the ratio of the energy absorption efficiency to a reference energy absorption efficiency. The reference energy absorption efficiency is an energy absorption efficiency in the case where the material of the member 70 is the steel sheet A and the width W of the flat part 71 is 80.0 mm. The energy absorption efficiency is an energy absorption amount for the cross-sectional area (sheet thickness × cross-section line length) of the member 70 in a predetermined displacement section.

From FIG. 12, it can be seen that for both the steel sheets A and B, the smaller the width W of the flat part 71 on the side of compression by bending, the higher the energy absorption efficiency is. When the width W of the flat part 71 is less than 80.0 mm, the energy absorption efficiency of the steel sheet B is significantly higher than the energy absorption efficiency of the steel sheet A. Under conditions where the width W of the flat part 71 was 20.0 mm and 60.0 mm, a rupture occurred during bending and deformation of the member 70 made of the steel sheet A whose standard deviation ratio of the Vickers hardness was 1.0, whereas no rupture occurred during bending and deformation of the member 70 made of the steel sheet B whose standard deviation ratio of the Vickers hardness was more than 1.0, and the member 70 was sharply bent at a bead 72. Thus, when the steel sheet B was used, the energy absorption efficiency increased.

From this analysis, it was confirmed that when the standard deviation ratio of the Vickers hardness of the steel sheet forming the flat part is more than 1.0, as the width of the flat part on the side where the member is compressed by bending decreases, the energy absorption performance tends to be improved with respect to the steel sheet whose standard deviation ratio is 1.0. This tendency holds true regardless of the sheet thickness of the steel sheet. From the result of this analysis, the width of the flat part required for the frame member to deliver excellent energy absorption performance is considered to be 70.0 mm or less.

### REFERENCE SIGNS LIST

100: frame member
10: closed cross-section part
20: stress concentration part
311, 312, 41, 42: flat part
313, 314, 32, 33, 43, 44, 45, 46: ridge part
50: reinforcement member
60: bead

## Claims

1. A frame member formed by using a steel sheet, comprising:
a closed cross-section part whose cross section perpendicular to an axial direction of the frame member is a closed cross section, the closed cross-section part including a flat part and a ridge part, the flat part having a straight shape in the cross section and a width of 70.0 mm or less, and the ridge part being continuous to the flat part and having a curved shape in the cross section; and
a stress concentration part provided in at least one of the flat part and the ridge part, wherein
a Vickers hardness of a central portion in a sheet thickness direction of the flat part is 350 Hv or more, and
a standard deviation ratio is more than 1.0, the standard deviation ratio being obtained by dividing a standard deviation of a frequency distribution of the Vickers hardness of a near-surface portion of the flat part by a standard deviation of a frequency distribution of the Vickers hardness of the central portion of the flat part.

2. The frame member according to claim 1, wherein the stress concentration part is a recessed portion or a projecting portion formed on at least one of the flat part and the ridge part.

3. The frame member according to claim 1, wherein the flat part includes a bent portion that is bent when viewed from a side of the ridge part or viewed in the sheet thickness direction, and
the stress concentration part is the bent portion.

4. The frame member according to claim 1, wherein at least one of the flat part and the ridge part includes a plurality of high strength parts disposed at intervals in the axial direction and a low strength part having a lower strength than the high strength parts and disposed between the high strength parts in the axial direction, and
the stress concentration part is the low strength part.

5. The frame member according to claim 4, further comprising:
a plurality of reinforcement members that is provided on at least one of the flat part and the ridge part and disposed at intervals in the axial direction, wherein
the high strength parts are parts of the frame member in which the reinforcement members are provided, and
the low strength part is a part of the frame member located between the reinforcement members in the axial direction.

6. The frame member according to claim 4, wherein the flat part includes a plurality of beads that is disposed at intervals in the axial direction and extends in the axial direction,
the high strength parts are parts of the flat part in which the beads are provided, and
the low strength part is a part of the flat part located between the beads in the axial direction.
